# EUROPEAN PATENT APPLICATION

(11) **EP 2 075 727 A1**
(43) Date of publication of application: **01.07.2009**
(21) Application number: 07800777.0
(22) Date of filing: 23.08.2007
(51) Int. Cl.: G06F 21/00, H04L 12/24

(54) **A SYSTEM AND METHOD FOR EXPORTING PERMISSION**

(30) Priority: 17.10.2006 CN 200610149934
(71) Applicant: Huawei Technologies Co., Ltd., Longgang District, Shenzhen Guangdong 518129 (CN)
(72) Inventor: DANG, Pei Huawei Administration Building, Guangdong 518129 (CN); LI, YiminHuawei Administration Building, Guangdong 518129 (CN); ZHANG, RenzhouHuawei Administration Building, Guangdong 518129 (CN); ZHOU, HaojunHuawei Administration Building, Guangdong 518129 (CN); FENG, WenjieHuawei Administration Building, Guangdong 518129 (CN); ZHOU, ChenHuawei Administration Building, Guangdong 518129 (CN); ZHOU, ZhipengHuawei Administration Building, Guangdong 518129 (CN); HUANG, ChenHuawei Administration Building, Guangdong 518129 (CN); CHEN, DagangHuawei Administration Building, Guangdong 518129 (CN)
(74) Representative: Pfenning, Meinig & Partner GbR
(86) International application number: PCT/CN2007/002557
(87) International publication number: WO 2008/046291

(57) **Abstract**

A method for exporting permission is provided, it is used to solves the problem that the permission can not be exported multiple times among several DRM systems in the prior art; the method includes that: the first device exports the permission to the second device, said first device decides whether it is allowed that the permission could be exported to the system to which the second device belongs before exporting the permission; said first device further decides that whether it is allowed to export the export right of said permission before exporting the permission, and exports the export right of said permission to the second device if it is allowed, such that the second device can export said permission to another device. A terminal apparatus, a server and a communication network are also disclosed.

## Description

### Field of the Invention

The present invention relates to the field of digital rights management technologies and in particular to method and system for exporting a license.

### Background of the Invention

Digital Rights Management (DRM) protects legal rights of content owners primarily by controlling the use of digital contents through permission constraints and content protection schemes. Digital content which is downloaded by a user to the terminal device has been encrypted by the Content Issuer (CI); the Rights Issuer (RI) is responsible for issuing a license corresponding to the digital content, which includes a content key for decrypting the digital content and corresponding rights. The terminal device can use the purchased digital content normally only if it is provided with both a content data package (including information necessary to decrypt the digital content) and the license. A DRM agent decrypts a license key using the public key of the terminal device, obtains the content key in the license by the license key, so as to decrypt the digital content and guarantee the use of the digital content complying with the permission information in the license.

Content protection standards, such as Open Mobile Architecture DRM (OMA DRM) and Digital Video Broadcasting (DVB CPCM), provide a function for exporting between different DRM systems, by which content protected with a DRM system and a corresponding license can be transferred to a terminal device supporting another DRM standard.

In order to guarantee a secure usage of the rights, an export source DRM system shall make restriction on the usage of original content that is allowed in a destination DRM system, and define the destination DRM systems to which the rights transfer is permitted. During the transfer of the permission, it is firstly determined that whether the destination DRM system is a DRM system that has been confirmed supporting the corresponding permission.

In the standard of OMA DRM 2.0, the way of export is divided into two types: one is "copy", i.e., a source device still retains the current rights on the content after exporting the rights of that content, and the other is "move", i.e., the source device exports the current rights and does not retain the rights on the exported content any more.

Currently, the standard of OMA DRM supports all rights in a right object (RO) to be exported, except an export permission, so that an exported license cannot be exported again to other devices. Based upon the standard of OMA DRM, a specific example of supporting an export to one of a plurality of export destination systems is as follows.

Export destination DRM systems are defined as a system XYZ, ver.1.0 or a system ABC, ver.2.0, and the REL can be defined as follows.

```
    <oma-dd:export oma-dd:mode="move">
       <o-ex:constraint>
           <oma-dd: system>
                <o-ex:context>
                    <o-dd:version> 1.0</o-dd:version>
                    <o-dd:uid>XYZ</o-dd:uid>
                </o-ex:context>
                <o-ex:context>
                    <o-dd:version>2.0</o-dd:version>
                    <o-dd:uid>ABC</o-dd:uid>
                </o-ex:context>
            </oma-dd:system>
       </o-ex:constraint>
    </oma-dd:export>
```

When executing an export operation, a source DRM terminal firstly determines whether a destination system is one of the defined systems (system XYZ, ver.1.0 or system ABC, ver.2.0), and if the destination system is one of the defined systems, the source DRM terminal executes the export operation by exporting the rights to either of the two systems; otherwise, the source DRM terminal don't execute the export operation.

An exported permission with an export permission is not supported by the prior art, i.e., transfer of an export permission is not supported by the prior art, and multiple transfers of a permission between a plurality of DRM systems are not supported either. Further, the standard of OMA DRM supports exporting systems to be defined (the defined systems should not include the source system itself) so that rights can only be exported to a particular system during an export process.

### Summary of the Invention

The invention provides method and system for exporting a license to solve the problem in the prior art that a license can not be exported for a plurality of times between a plurality of DRM systems.

The invention provides the following technical solutions.

A license exporting method, exporting a license by a first device to a second device, in which the first device determines at least whether the license is permitted to be exported to a system that the second device belongs to before exporting the license; further determining by the first device whether an export permission in the license is permitted to be exported before exporting the license; and exporting the export permission in the license to the second device if the export permission is permitted to be exported so that the second device can export the license to another device.

In accordance with the above method, attribute information of the license is provided with a first identifier indicating whether the export permission is permitted to be exported, and the first device determines at least according to the first identifier.

The first device further determines whether the export permission is permitted to be exported according to the times that the export permission can be exported.

While determining whether the license is permitted to be exported to the system that the second device belongs to, the first device further determines whether the second device meets a particular constraint and the license is permitted to be exported temporarily to the second device if the particular constraint is met.

The particular constraint is a geographic scope or a spatial scope of the second device.

The attribute information of the license is provided with a second identifier defining the range of destination systems to which the license is exported and the first device determines whether the license is permitted to be exported to the system that the second device belongs to according to the second identifier, the second identifier indicates that the license is permitted to be exported and imported between any two systems among a plurality of specified systems, or indicates that the license is permitted to be exported and imported between two systems of a specified pair of systems.

If the second identifier indicates that the license is permitted to be exported and imported between any two systems among a plurality of specified systems, the any two systems are different systems.

If the second identifier indicates that the license is permitted to be exported between two systems of a specified pair of systems, a system that the first device belongs to is either one of the two systems; or the system that the first device belongs to is an exporting system specified in the two systems, and the system that the second device belongs to is an importing system specified in the two systems.

The first device further converts the license according to information of the second device before exporting the license; alternatively, the second device converts the license upon reception of the license.

The first device and the second device are a terminal device, a gateway or a server.

A license exporting method, exporting a license by a first device to a second device, the first device determines at least whether the license is permitted to be exported to a system that the second device belongs to before exporting the license; attribute information of the license is provided with a second identifier defining the range of destination systems to which the license is exported, and the first device determines whether the license is permitted to be exported to the system that the second device belongs to according to the second identifier; the second identifier indicates that the license is permitted to be exported and imported between any two systems among a plurality of specified systems, or indicates that the license is permitted to be exported and imported between two systems of a specified pair of systems.

In accordance with the above method, if the second identifier indicates that the license is permitted to be exported and imported between any two systems among a plurality of specified systems, the any two systems are different systems.

If the second identifier indicates that the license is permitted to be exported and imported between two systems of a specified pair of systems, the system that the first device belongs to is any of the two systems in that specified pair; or the system that the first device belongs to is the exporting system, and the system that the second device belongs to is the importing system.

The first device further converts the license according to information of the second device before exporting the license; alternatively, the second device converts the license upon reception of the license.

Each of the first device and the second device is a terminal device, gateway or server.

A communication device includes:
a storage unit adapted to store a license and information relevant thereto;
a determination unit adapted to determine whether the license is permitted to be exported to a system that a destination device belongs to and whether an export permission in the license is permitted to be exported; and
a communication unit adapted to export the license to the destination device upon determining that the license is permitted to be exported to the system that the destination device belongs to and the export permission in the license is permitted to be exported.

The communication device further includes:
a conversion unit adapted to convert the license according to information of the destination device if the device and the destination device belong to different systems.

The communication device is a terminal device, a gateway or a server.

A communication system includes:
a first device adapted to determine whether a license stored in the present device is permitted to be exported to a system that a second device belongs to and whether an export permission in the license is permitted to be exported, and to export the license to the second device upon determining that the license is permitted to be exported to the system that the second device belongs to and the export permission in the license is permitted to be exported; and
the second device adapted to receive the license.

A first identifier indicating whether the export permission is permitted to be exported is provided in attribute information of the license, the first device determines at least according to the first identifier.

A second identifier defining the range of destination systems to which the license is exported is provided in the attribute information of the license, and the first device determines whether the license is permitted to be exported to the system that the second device belongs to according to the second identifier, the second identifier indicates that the license is permitted to be exported and imported between any two systems among a plurality of specified systems, or indicates that the license is permitted to be exported and imported between two systems of a specified pair of systems.

Each of the first device and the second device is a terminal device, a gateway or a server.

The invention attains the following advantageous effects.

1. In the invention, an exporting device determines that the license is permitted to be exported to a system that an importing device belongs to , and determines whether an export permission in the license is permitted to be exported, then exports the license to the importing device upon determining that the license is permitted to be exported to the system that the importing device belongs to and that the export permission is permitted to be exported. Such a process enables the importing device to export the license to another device, thereby enabling the license to be exported and imported between a plurality of DRM systems.

2. Both the range of systems to which the license is exported and whether the export permission in the license is permitted to be exported are defined, which prevents the license from being spread and guarantees the benefit of the license issuer. Attainment of benefits of both parties involved in license consumption can increase the demand for content consumption.

### Brief Description of the Drawings

Figure 1 is a structural diagram of a communication system according to an embodiment of the invention;

Figure 2A is a structural diagram of a first device according to an embodiment of the invention;

Figure 2B is a structural diagram of a first device when a system that the first device belongs to is different from a system a second device belongs to according to an embodiment of the invention;

Figure 3 is a flow chart of exporting a license from a first device to a second device according to an embodiment of the invention; and

Figure 4 is a flow chart of exporting a license from a terminal device A to a terminal device B according to an embodiment of the invention.

### Detailed Description of the Invention

Preferred embodiments of the invention will be described in details hereinafter with reference to the drawings.

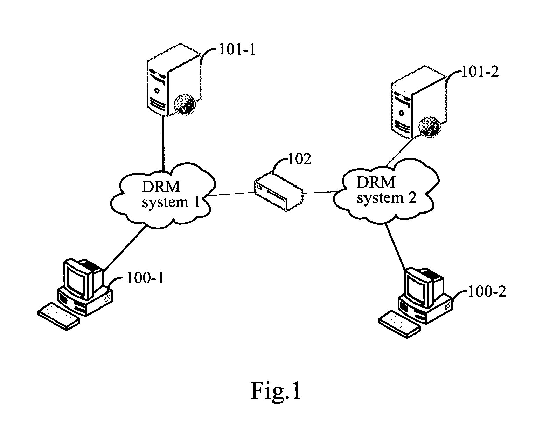

Referring to Figure 1, the whole communication system in the present embodiment includes a Digital Rights Management (DRM) system 1 (e.g., OMA DRM system), a DRM 2 (e.g., AVS DRM) (not limited to two DRM systems) and a gateway 102. DRM system 1 includes a terminal device 100-1 and a server 101-1, and DRM system 2 includes a terminal device 100-2 and a server 101-2. There can be multiple gateways, terminal devices and servers in the DRM system, and if permitted, multiple exports and imports of license can be conducted between the terminal device and the server or between the gateway and the terminal device or the server that belongs to DRM system 1 and DRM system 2 respectively.

Descriptions will be made below by an example of exporting and importing a license between the terminal devices in the different DRM systems, a terminal device from which the license is exported is referred to as a first device and a terminal device to which the license is imported is referred to as a second device.

While exporting or importing the license, the second device requests the first device to export the license to the second device; alternatively, the first device is triggered to initiatively export the license to the second device. Prior to exporting, the first device firstly determines whether the license is permitted to be exported to the system that the second device belongs to and also determines whether an export permission in the license is permitted to be exported.

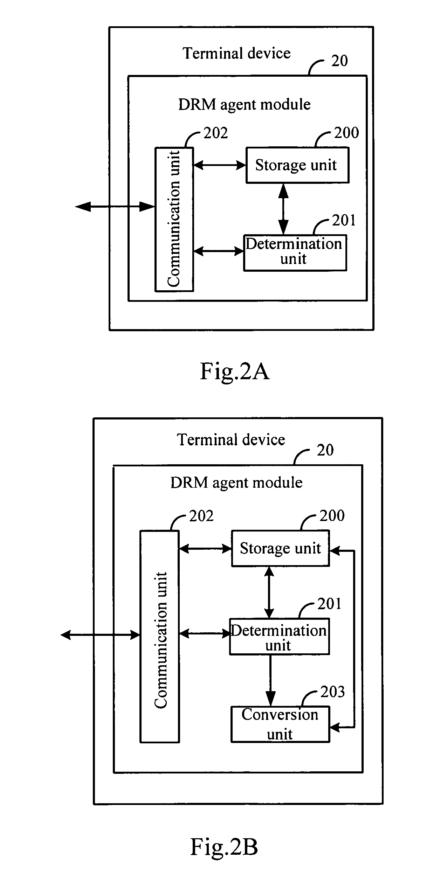

Referring to Figure 2A, preferably, the first device includes a DRM agent module 20 adapted to determine whether the license stored in the first device is permitted to be exported to the system that the second device belongs to and whether the export permission in the license is permitted to be exported, and to export the license to the second device upon determining that the license is permitted to be exported to the system that the second device belongs to and that the export permission in the license is permitted to be exported.

Particularly, the DRM agent module 20 includes a storage unit 200, a determination unit 201 and a communication unit 202. The storage unit 200 is adapted to store the license and information relevant thereto, the determination unit 201 is adapted to determine whether the license is permitted to be exported to the system that the second device belongs to and whether the export permission in the license is permitted to be exported, according to the license and the information relevant thereto stored in the storage unit, and the communication unit 202 is adapted to export the license to the second device upon determination that the license is permitted to be exported to the system that the second device belongs to and that the export permission in the license is permitted to be exported.

Attribute information of the license is provided with an identifier defining the range of systems which the license is permitted to be exported to or be imported from, and the determination unit 201 determines whether the license is permitted to be exported to the system that the second device belongs to according to the identifier. Particularly, by setting a "type" attribute in the <system> element in the license, the identifier can indicate the expression type of the range of systems :

<!ATTLIST oma-dd:system oma-dd: type (mutual|oneway) #REQUIRED> // the attribute value "mutual" indicates that it is permitted to export and import the license between any two systems in this set, and the attribute value "oneway" indicates the two systems which the license is permitted to be exported to and imported from correspond to a preset relation between systems.

A specific example will be presented below in which exporting and importing a license among three systems are permitted by setting the attribute value "mutual".

```
    <oma-dd:system type="mutual" >
       <o-ex:context>
            <o-dd:version> 1.0</o-dd:version>
            <o-dd:uid>XYZ</o-dd:uid>
        </o-ex:context>
        <o-ex:context>
            <o-dd:version>2.0</o-dd:version>
            <o-dd:uid>XYZ</o-dd:uid>
        </o-ex:context>
        <o-ex:context>
            <o-dd:version>2.0</o-dd:version>
            <o-dd:uid>OMA</o-dd:uid>
        </o-ex:context>
    </oma-dd:system>
```

A pair of systems which a license is permitted to be exported to and imported from can be defined by setting the attribute value "oneway". A specific example will be presented below in which a pair of systems which the license is permitted to be exported to and imported from are defined in this way, exporting and importing of a license are permitted between system XYZ 2.0 and system OMA 2.0, and between system XYZ 2.0 and system XYZ 1.0, but exporting and importing of the license between system XYZ 1.0 and system OMA 2.0 is not defined.

```
    <o-ex:constraint>
       <oma-dd:system type="oneway" >
           <o-ex:context>
                <o-dd:version>2.0</o-dd:version>
                <o-dd:uid>XYZ</o-dd:uid>
           </o-ex:context>
           <o-ex:context>
                <o-dd:version>2.0</o-dd:version>
                <o-dd:uid>OMA</o-dd:uid>
           </o-ex:context>
        </oma-dd:system>
          <oma-dd:system type="oneway" >
           <o-ex:context>
                <o-dd:version>2.0</o-dd:version>
                <o-dd:uid>XYZ</o-dd:uid>
           </o-ex:context>
           <o-ex:context>
                <o-dd:version> 1.0</o-dd:version>
                <o-dd:uid> XYZ </o-dd:uid>
           </o-ex:context>
       </oma-dd:system>
    </o-ex:constraint>
```

In setting the attribute value "oneway" as above, if one of the pair of systems is further defined as an exporting system and the other is defined as an importing system, then it is required that the current exporting system and importing system of the license shall correspond to the exporting system and the importing system of the defined pair of systems, and if no exporting-importing relations of the systems are defined, it is only required that the current exporting system and importing system of the license shall correspond respectively to either one of the defined pair of systems.

Preferably, in order to prevent a permission from being spread, it is also required that an exporting system and an importing system are different systems when defining the range of systems to export and import the license. In this case, it is firstly to determine whether an exporting system and an importing system of the license are different systems and then to determine whether the importing system is in the defined range of systems upon each transfer of the permission.

If it is determined that the exporting system and the importing system are different systems, then it only has to determine whether the importing system is in the defined range of systems. Here, the attribute "type" in the <system> element that is stated above can be used to determine whether it is necessary to determine whether the exporting system and the importing system are different systems, and a specific definition thereof is as follows.

<!ATTLIST oma-dd:system oma-dd: type (mutual|oneway) #REQUIRED> // the attribute value "mutual" requires strict correspondence of the current exporting system and importing system to the defined systems, and determination that whether the two systems are different; the attribute value "oneway" has ensured that the two parties of the transfer do not belongs to a same system, then it is only has to determine whether the importing system is in the defined range of systems.

Referring to Figure 2B, if an exporting system and an importing system are different systems, the DRM agent module 20 further includes a conversion unit 203 adapted to convert the license into a format that can be received by the system that the second device belongs to.

A specific example will be presented below in which an OMA REL format is converted into an AVS supported format and it is assumed that the "play" permission in the current RO is described in Rights Expression Language (REL) as follows.

```
    < o-ex:permission>
       < oma-dd:play>
            < o-ex:constraint>
                <count>4</count>
                < o-dd:dateTime>
                     < o-dd:end>2005-2-9T23:59:59</ o-dd:end>
                </ o-dd:dateTime>
            </ o-ex:constraint>
       </ oma-dd:play>
    </ o-ex:permission>
```

Convert to AVS format as:

```
       <avs-drel:right avs-drel:id="ID004">
            <avs-rdd:normalRight>
                <avs-rdd:play/>
            </avs-rdd:normalRight>
       </avs-drel:right>
......
       <avs-drel:constraint avs-drel:id="ID006">
          <avs-drel:container>
               <avs-rdd:bounds>
                      <avs-rdd:count>4</avs-rdd:count>
                </avs-rdd:bounds>
                <avs-rdd:temporal>
                    <avs-rdd:dateTime>
                       <avs-rdd:end>2005-2-9T23:59:59</avs-rdd:end>
                    </avs-rdd:dateTime>
                </avs-rdd:temporal>
          </avs-drel:container>
       </avs-drel:constraint>
```

The content key in the RO is re-encapsulated by the AVS standard, and a license with AVS format is generated at last.

In another example, AVS supports a constraint on locations where the license is used but OMA dose not support this, for instance:

```
    <avs-rdd:spatial>wuhan</avs-rdd:spatial> // location constraint, which is not
 supported by OMA.
```

Therefore when an AVS system exports a license including a location constraint to an OMA system, the location constraint is removed and then the license is exported to the OMA system; alternatively, the license is not permitted to be exported to the OMA system; alternatively, the license is permitted to be exported to an OMA device that supports the function of location, etc.

Further, the Rights Expression Language of the OMA DRM system supports setting a "Top Level constraint", i.e., a permission constraint is permitted to restrict multiple other permissions, for instance:

```
    < o-ex:permission>
         < o-ex:constraint>
                <count> 10</count>
       </ o-ex:constraint>
       < oma-dd:play/>
       <oma-dd:display/ >
    </ o-ex:permission>
```

The permission description above means that playing and displaying are permitted within 10 times, i.e., the sum of times of playing and displaying is at most 10, for example playing at 2 times and displaying at 8 times; or playing at 5 times and displaying at 5 times, provided that the sum of times of playing and displaying does not exceed 10.

AVS DRM system does not support Top Level constraint, therefore while exporting a license, OMA DRM system does not permit such a constraint in the license to be transferred to a AVS DRM system; or convert the Top Level constraint into constraints on specific permissions and then transfers them to the AVS DRM system, for instance:

```
    < o-ex:permission>
       < oma-dd:play>
            < o-ex:constraint>
                <count>5</count>
           </ o-ex:constraint>
       </ oma-dd:play>
       <oma-dd:display >
            < o-ex:constraint>
                <count>5</count>
           </ o-ex:constraint>
      </ oma-dd:display>
    </ o-ex:permission>
```

The communication unit 202 exports the license to the second device after the conversion unit 203 converts the license into the format that can be received by the system that the second device belongs to.

Here, the first device may not convert the license while exporting the license; instead, the second device can convert the license upon reception of the license.

Defining that an exporting system and an importing system are different systems as above is a preferred embodiment. Here, the exporting system and the importing system may not necessarily be different systems, i.e., exporting and importing the license between devices in a same system are supported, then it only has to determine whether the importing system is in the defined range of systems.

The attribute information of the license is also provided with another identifier indicating whether an export permission in the license is permitted to be exported, and the determination unit 201 determines whether the export permission is permitted to be exported according to the identifier. Specifically, the identifier can be defined by adding an attribute "SelfExport" in the <export> permission element in the license:

<!ATTLIST oma-dd:export oma-dd: SelfExport (Yes|No) #REQUIRED> // the attribute value "Yes" indicates that the export permission itself is also permitted to be transferred as a permission to a destination DRM system, and the attribute value "no" indicates that the export permission itself is not permitted to be transferred as a permission to the destination DRM system.

The determination unit 201 also determines whether the export permission is permitted to be exported according to a number of times that the export permission can be exported. Specifically, the times that the export permission can be exported can be described by setting a status value in the license, for example an element <gcount>:

<!ELEMENT o-dd:gcount (#PCDATA)> // gcount is a natural number, the value of which reduces by one accordingly upon each transfer. If the value of gcount is 0, then the export permission is not permitted to be transferred to another DRM system any more.

Further, a license sharing mode of Ad Hoc Share is proposed in the standards of OMA SCE in which a license of a device can be shared temporarily for use with some devices in some particular conditions (e.g., approximate to a geographical scope or a spatial scope), and "temporarily for use" means that the exported license can be used only within a limited period of time. Once the conditions for temporary sharing no longer exist, the devices having obtained the license can not use the license any more. For instance, once a geographical scope or a spatial scope to the device that provides a temporarily shared license exceeds a specific condition, or a limited period of time in which the license can be used expires, the temporary sharing of the license will be invalided automatically.

Similarly, an export permission can also be shared temporarily to enable temporary sharing between DRM devices with different standards. For instance, if an AD HOC export permission is supported and relative locations of the first device exporting the license and the second device receiving the license are set, or an absolute location of the second device is set, the first device can have the license shared temporarily for use with a plurality of different DRM systems.

In order to define the exported Ad Hoc, a flag can be set by, for instance, setting an attribute in the <export> element to indicate whether a permission is permitted to be temporarily exported.

<!ATTLIST oma-dd:export oma-dd: share (Adhoc|No) #REQUIRED> // 'Adhoc' indicates that the permission is permitted to be shared temporarily with DRM devices that support different standards, and 'No' indicates that the permission is not permitted to be shared temporarily with DRM devices that support different standards.

A license defined by REL as below can be exported 10 times in a manner of temporary sharing between XYZ 1.0, XYZ 2.0 and OMA 2.0.

```
    <o-ex:permission>
       <o-dd:display/>
       <o-dd:print/>
       <oma-dd:export oma-dd:mode="AdHoc ">
         <o-ex:constraint>
          <o-dd:gcount> 10</o-dd:gcount>
          <oma-dd:system type="mutual" >
           <o-ex:context>
                <o-dd:version> 1.0</o-dd:version>
                <o-dd:uid>XYZ</o-dd:uid>
           </o-ex:context>
           <o-ex:context>
                <o-dd:version>2.0</o-dd:version>
                <o-dd:uid>XYZ</o-dd:uid>
           </o-ex:context>
           <o-ex:context>
                <o-dd:version>2.0</o-dd:version>
                <o-dd:uid>OMA</o-dd:uid>
           </o-ex:context>
          </oma-dd:system>
         </o-ex:constraint>
       </oma-dd:export>
      </o-ex:permission>
```

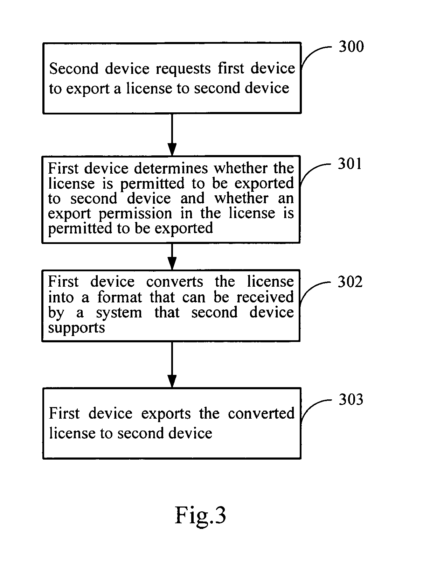

Referring to Figure 3, the process flow of a first device exporting a license to a second device is as follows.

Step 300: The second device requests the first device to export the license to the second device.

Step 301: The first device determines whether the license is permitted to be exported to the second device and whether an export permission in the license is permitted to be exported.

Step 302: The first device converts the license into a format that can be received by the second system upon determining that the license is permitted to be exported to the second device and that the export permission in the license is permitted to be exported.

Step 303: The first device exports the converted license to the second device.

In the step 300, the second device requests the first device to export the license to the second device. Alternatively, the first device can also be triggered initiatively to export the license to the second device.

In the step 301, determination by the first device can be made by a DRM agent module in the first device.

A specific example of a permission transfer in the flow as illustrated in Figure 3 will be presented below.

It is assumed that there are currently an OMA DRM 1.0 terminal device A, an AVS DRM 1.0 terminal device B and a DVB DRM 1.0 terminal device C, and that a user wants to transfer a film from the terminal device A to the terminal device B or the terminal device C for watching. A license corresponding to the film is permitted to be exported in the "move" way, and is permitted to be exported for 4 times to different systems. The permission can be described in the license as follows.

```
    < o-ex:permission>
       <oma-dd:export oma-dd:mode="move" SelfExport "Yes" >
              <o-ex:constraint>
                    <o-dd:gcount>4</o-dd: gcount >
                    <oma-dd:system type=" oneway" >
                         <o-ex:context>
                            <o-dd:version>1.0</o-dd:version>
                            <o-dd:uid>OMA</o-dd:uid>
                        </o-ex:context>
                        <o-ex:context>
                            <o-dd:version> 1.0</o-dd:version>
                            <o-dd:uid>AVS</o-dd:uid>
                        </o-ex:context>
                    </oma-dd:system>
                    <oma-dd:system type="oneway" >
                         <o-ex:context>
                            <o-dd:version> 1.0</o-dd:version>
                             <o-dd:uid>OMA</o-dd:uid>
                        </o-ex:context>
                        <o-ex:context>
                             <o-dd:version> 1.0</o-dd:version>
                             <o-dd:uid>DVB</o-dd:uid>
                        </o-ex:context>
                </oma-dd:system>
                    <oma-dd:system type="oneway" >
                          <o-ex:context>
                             <o-dd:version>1.0</o-dd:version>
                            <o-dd:uid>DVB</o-dd:uid>
                        </o-ex:context>
                        <o-ex:context>
                            <o-dd:version> 1.0</o-dd:version>
                            <o-dd:uid>AVS</o-dd:uid>
                        </o-ex:context>
                    </oma-dd:system>
              </o-ex:constraint>
       </oma-dd:export>
   </ o-ex:permission>
```

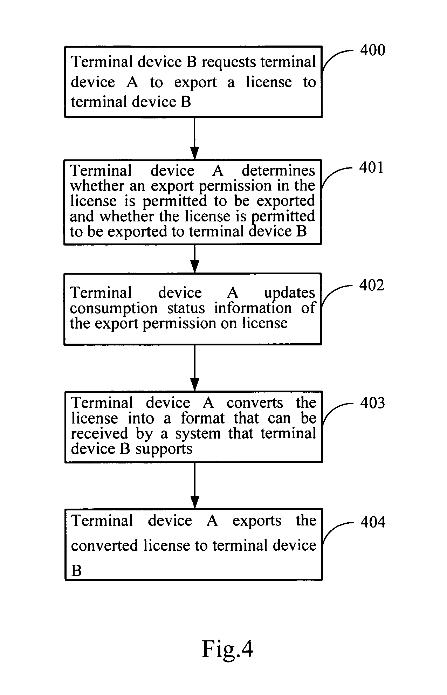

As illustrated in Figure 4, the process that the terminal device A exports a license to the terminal device B is as follows.

Step 400: The terminal device B requests the terminal device A for exporting the license thereto.

Step 401: The terminal device A obtains that the value of the "SelfExport" attribute in the <export> element is "Yes" then determines an export permission in the license is permitted to be exported; subsequently, the terminal device A obtains a system attribute of the terminal device B, i.e. AVS DRM 1.0 , and finds a pair of systems {OMA DRM 1.0, AVS DRM 1.0} which the license is permitted to be exported to and imported from from the "system" attribute information in the <export> element, then determines that the license is permitted to be exported to the terminal device B.

Step 402: The terminal device A acquires that the current value of <gcount> is 4 and updates the current number of times that the export permission can be exported by decreasing the value of <gcount> by one, resulting 3.

Step 403: The terminal device A converts the license into a format understandable by an AVS system.

Step 404: The terminal device A exports the converted license to the terminal device B.

In the step 403, it is known that the terminal device A and the terminal device B are different devices. Similarly, the terminal device may further convert a film content file into a format understandable by an AVS system, the converted film content file is subsequently transferred to the terminal device B.

Exporting and importing a license between servers of different DRM systems, or between a gateway and a terminal device or a server is similar to exporting and importing a license between the terminal devices above. If determination that whether the license and the export permission in the license is permitted to be exported is made by the gateway, then the gateway is equivalent to the first device aforementioned and a same process can be performed. Similarly, the gateway or server may also includes a communication unit, a storage unit, a determination unit and a conversion unit as illustrated in Figure 2A and Figure 2B .

As can be seen from the above embodiments, in the present invention, a device from which an license is exported determines whether the license is permitted to be exported to a system and whether an export permission in the license is permitted to be exported prior to exporting the license, the system being a system that a device to which the license is imported belongs to; and exports the license to the importing device upon determining that the license is permitted to be exported to the system that the importing device belongs to and that the export permission is permitted to be exported. Such a process enables the importing device to export the license to other devices, thereby enabling the license to be exported and imported among a plurality of DRM systems. Further, both the range of systems to which the license is exported and whether the export permission in the license is permitted to be exported are defined, which prevent the license from being spread, and the benefit of a license issuer can be guaranteed. Attainment of benefits of both parties involved in license consumption can increase the demand for content consumption.

Apparently, those skilled in the art can make various modifications and variations to the invention without departing from the spirit and scope of the invention. As such, the invention is intended to encompass the modifications and variations made to the invention provided that these modifications and variations that fall within the scope of the claims appended to the invention and equivalents thereof.

## Claims

1. A license exporting method, comprising exporting a license by a first device to a second device, the first device determining at least whether the license is permitted to be exported to a system that the second device belongs to before exporting the license; **characterized in that**, the method further comprising determining by the first device before exporting the license whether an export permission in the license is permitted to be exported, and exporting the export permission in the license to the second device if the export permission in the license is permitted to be exported, which enables the second device to export the license to another device.

2. The method according to claim 1, **characterized in that** a first identifier indicating whether the export permission is permitted to be exported is provided in attribute information of the license, the first device determines at least according to the first identifier.

3. The method according to claim 2, further comprising, determining by the first device whether the export permission is permitted to be exported according to the times that the export permission may be exported.

4. The method according to claim 1, further comprising, determining by the first device whether the second device meets a particular constraint in determining whether the license is permitted to be exported to the system that the second device belongs to, and the license is permitted to be exported temporarily to the second device if the particular constraint is met.

5. The method according to claim 4, **characterized in that** the particular constraint is a geographical scope or a spatial scope where the second device is located.

6. The method according to claim 1, **characterized in that** a second identifier defining the range of destination systems to which the license is exported is provided in attribute information of the license, the first device determines whether the license is permitted to be exported to the system that the second device belongs to according to the second identifier; wherein the second identifier indicates that the license is permitted to be exported and imported between any two systems among a plurality of specified systems, or indicates that the license is permitted to be exported and imported between two systems of a specified pair of systems.

7. The method according to claim 6, **characterized in that**, if the second identifier indicates that the license is permitted to be exported and imported between any two systems among a plurality of specified systems, the any two systems are different systems.

8. The method according to claim 6, **characterized in that**, if the second identifier indicates that the license is permitted to be exported between two systems of a specified pair of systems, a system that the first device belongs to is either one of the two systems; alternatively, the system that the first device belongs to is an exporting system specified in the two systems and the system that the second device belongs to is an importing system specified in the two systems.

9. The method according to claim 1, further comprising, converting by the first device the license according to information of the second device before exporting the license; alternatively, converting by the second device the license after receiving the license.

10. The method according to any one of claims 1 to 9, **characterized in that** each of the first device and the second device is a terminal device, a gateway or a server.

11. A license exporting method, comprising exporting a license by a first device to a second device, the first device determining at least whether the license is permitted to be exported to a system that the second device belongs to before exporting the license, **characterized in that** a second identifier defining the range of destination systems to which the license is exported is provided in attribute information of the license, the first device determines whether the license is permitted to be exported to the system that the second device belongs to according to the second identifier.

12. The method according to claim 11, **characterized in that** the second identifier indicates that the license is permitted to be exported and imported between any two systems among a plurality of specified systems, or indicates that the license is permitted to be exported and imported between two systems of a specified pair of systems.

13. The method according to claim 12, **characterized in that**, if the second identifier indicates that the license is permitted to be exported and imported between any two systems among a plurality of specified systems, the any two systems are different systems.

14. The method according to claim 12, **characterized in that,** if the second identifier indicates that the license is permitted to be exported and imported between two systems of a specified pair of systems, a system that the first device belongs to is either one of the two systems; or, the system that the first device belongs to is an exporting system specified in the two systems and the system that the second device belongs to is an importing system specified in the two systems.

15. The method according to claim 11, further comprising converting the license by the first device according to information of the second device before exporting the license; or, converting the license by the second device after receiving the license.

16. The method according to any one of claims 11 to 15, **characterized in that** each of the first device and the second device is a terminal device, a gateway or a server.

17. A communication device, comprising:
a storage unit adapted to store a license and information relating to the license ;
a determination unit adapted to determine whether the license is permitted to be exported to a system that a destination device belongs to and whether an export permission in the license is permitted to be exported; and
a communication unit adapted to export the license to the destination device upon determining that the license is permitted to be exported to the system that the destination device belongs to and that the export permission in the license is permitted to be exported.

18. The device according to claim 17, further comprising:
a conversion unit adapted to convert the license according to information of the destination device if the device and the destination device belong to different systems.

19. The device according to claim 17 or 18, **characterized in that** the device is a terminal device, a gateway or a server.

20. A communication system, comprising:
a first device adapted to determine whether a license stored in the device is permitted to be exported to a system that a second device belongs to and whether an export permission in the license is permitted to be exported, and to export the license to the second device upon determining that the license is permitted to be exported to the system that the second device belongs to and that the export permission in the license is permitted to be exported; and
the second device adapted to receive the license.

21. The system according to claim 20, **characterized in that** a first identifier indicating whether the export permission is permitted to be exported is provided in attribute information of the license, and the first device determines at least according to the first identifier.

22. The system according to claim 20, **characterized in that** a second identifier defining the range of destination systems to which the license is exported is provided in attribute information of the license, and the first device determines whether the license is permitted to be exported to the system that the second device belongs to according to the second identifier; wherein the second identifier indicates that the license is permitted to be exported and imported between any two systems among a plurality of specified systems, or indicates that the license is permitted to be exported and imported between two systems of a specified pair of systems.

23. The system according to claim 20, 21 or 22, **characterized in that** each of the first device and the second device is a terminal device, a gateway or a server.
